# EUROPÄISCHE PATENTANMELDUNG

(11) **EP 1 813 509 A1**
(43) Veröffentlichungstag der Anmeldung: **01.08.2007**
(21) Anmeldenummer: 06126238.2
(22) Anmeldetag: 15.12.2006
(51) Int. Cl.: B62D 5/065, B62D 5/04

(54) **Hydraulische Servolenkung**

(30) Priorität: 31.01.2006 DE 102006004315
(71) Anmelder: ZF-Lenksysteme GmbH, 73527 Schwäbisch Gmünd (DE)
(72) Erfinder: Kogel, Walter, 73453 Abtsgmünd (DE); Braun, Andreas, 73116 Wäschenbeuren (DE)

(57) **Zusammenfassung**

Die Erfindung betrifft eine hydraulische Servolenkung (1) für ein Fahrzeug, insbesondere für einen Nutzkraftwagen mit einem ersten, hydraulischen Aktuator (2) zur Bereitstellung einer Lenkkraft oder Lenkhilfskraft für die Lenkwinkelverstellung eines oder mehrerer gelenkter Räder des Fahrzeugs, und mit einem zweiten, elektrischen Aktuator (3) zur Bereitstellung einer Lenkkraft oder Lenkhilfskraft für die Lenkwinkelverstellung des gelenkten Rades.

Um eine Servolenkung anzugeben, bei der die Verlustleistung reduziert und die Betriebstemperatur abgesenkt ist, ist vorgesehen, dass der erste, hydraulische Aktuator (2) bei der Fahrt des Fahrzeugs in Abhängigkeit von Fahrt- und/oder Fahrzeugparametern in eine Außerbetriebsstellung bringbar ist.

## Beschreibung

Die Erfindung betrifft eine hydraulische Servolenkung für ein Fahrzeug nach dem Oberbegriff des Anspruchs 1.

Heutige Personenkraftwagen und Nutzkraftwagen sind in der Regel mit hydrau-lischen oder elektrohydraulischen Servolenkungen ausgestattet. Durch eine von einem Aktuator dabei erzeugte Kraft wird ein Lenkvorgang eines Fahrers unterstützt. Die hydraulische Energie wird dabei von einer Pumpe erzeugt, die permanent über einen Verbrennungsmotor des Kraftfahrzeugs angetrieben wird. Die Pumpenleistung muss so ausgelegt werden, dass bei niedrigen Motordrehzahlen große Lenkwinkel-änderungen in kurzer Zeit beim Lenken im Stand des Kraftfahrzeugs durchgeführt werden können. Beim Fahren mit höheren Geschwindigkeiten wird dagegen eine vergleichsweise niedrige Lenkenergie benötigt, sodass die Pumpe und das Lenk-system in diesem Fall überdimensioniert sind. Dies führt zu einer beträchtlichen Verlustleistung im Lenksystem, was sich in einer erhöhten Druckmitteltemperatur wiederspiegelt.

Es ist bekannt, die Momentenunterstützung oder die Verstärkung der Lenkung ge-schwindigkeitsabhängig auszulegen.

Die DE 38 08 900 A1 beschreibt ein Lenksystem für ein Kraftfahrzeug mit einer von einem Elektromotor angetriebenen Hydraulikpumpe, die über ein Lenkventil einen Lenkzylinder beaufschlagt. Der Elektromotor und die Hydraulikpumpe wird erst bei einer Soll-Lenkwinkeleingabe an einer Lenkhandhabe des Kraftfahrzeugs aktiviert und ist im Übrigen abgeschaltet, um Energie zu sparen.

Die DE 43 07 864 A1 beschreibt eine Hilfskraftlenkanlage für Kraftfahrzeuge mit einer von einem Elektromotor angetriebenen Hydraulikpumpe, welche über hydraulische Leitungen mittels eines Steuerventils mit mindestens einer Arbeitskammer eines Hydraulikzylinders verbindbar ist, der zur Lenkkraftunterstützung an eine mecha-nische Lenkung angekoppelt ist. Der Elektromotor wird mit reduzierter Leistung in einem Stand-by-Modus betrieben wenn keine Lenkkraftunterstützung benötigt wird.

Der Elektromotor wird in einem Betriebsmodus betrieben, wenn eine Lenkkraftunterstützung erforderlich ist.

Der DE 102 56 306 A1 ist eine hydraulische Servolenkung für ein Fahrzeug entnehmbar, mit einem Lenkgetriebe und mit einem ersten hydraulischen Aktuator zur Unterstützung einer Betätigung einer Lenkhandhabe durch einen Fahrer um eine Lenkwinkelverstellung gelenkter Räder eines Fahrzeugs zu bewirken. Um einen Funktions-gewinn der hydraulischen Servolenkung zu bewirken, der eine Variierung der Ver-tärkungskennlinie der Servolenkung zum Ziel hat, ist vorgesehen, einen zweiten, vorzugsweise elektrischen Aktuator hinzuzufügen, der als Lenkwellen-Aktuator ausgebildet ist.

Die bekannten elektrischen Servolenkungen sind für Nutzkraftwagen nicht geeignet, da die erforderliche elektrische Leistung nicht ausreicht. Bei Hinzufügen eines zweiten Aktuators zu einer hydraulischen Servolenkung wird der Leistungsbedarf der hydrau-ischen Servolenkung nicht grundsätzlich reduziert, da der erste Aktuator und dessen Druckmittelversorgungsquelle ständig in Betrieb bleiben, sodass die bekannten Servolenksysteme entweder ungeeignet für Nutzkraftwagen sind, oder aber keine kon-truktiven Merkmale aufweisen, den Energiebedarf während ihres Betriebes deutlich zu verringern.

Der Erfindung liegt die Aufgabe zugrunde, eine Servolenkung anzugeben, bei der die Verlustleistung reduziert und die Betriebstemperatur abgesenkt ist.

Die Aufgabe wird mit einer hydraulischen Servolenkung mit den Merkmalen des Anspruchs 1 gelöst.

Dadurch dass der erste, hydraulische Aktuator in Abhängigkeit von Fahrt- und/oder Fahrzeugparametern bei der Fahrt des Fahrzeugs in eine Außerbetriebsstellung bringbar ist, in der keine Leistungsaufnahme erfolgt und in der ausschließlich der zweite Aktuator eine Lenkkraft oder Lenkhilfskraft bereitstellt, ist eine konstruktive Maßnahme getroffen, bei geringem Lenkleistungsbedarf, etwa bei Geradeausfahrt des Fahrzeugs, den Energieverbrauch für die hydraulische Servolenkung deutlich zu verringern.

Bevorzugte Ausführungen ergeben sich aus den Unteransprüchen.

Der zweite Aktuator der hydraulischen Servolenkung ist bevorzugt ein elektrischer Aktuator, der einen geringeren, bevorzugt wesentlich geringeren Energiebedarf wie der erste, hydraulische Aktuator mit seiner Druckmittelpumpe aufweist.

Eine Steuerungs- und/oder Regelungseinrichtung ECU dient zur Ansteuerung des zweiten, elektrischen Aktuators, wobei diese zumindest Signale eines Lenkmoment-ensors und eines Rotorlagesensors des elektrischen Aktuators auswertet. Die Steuerungs- und/oder Regelungseinrichtung ist bevorzugt zur An- und Abschaltung des ersten, hydraulischen Aktuators mit herangezogen.

Die In- und Außerbetriebsstellung des ersten, hydraulischen Aktuators kann in einem ersten Ausführungsbeispiel der hydraulischen Servolenkung durch eine Abschaltung der den hydraulischen Aktuator mit Druckmittel beaufschlagenden Druckmittelfördereinrichtung erfolgen. Als Druckmittelfördereinrichtung eignet sich eine in ihrem Fördervolumen variierbare Pumpe, wie etwa eine Flügelzellenpumpe, deren Hub auf Null abgeregelt werden kann, um den hydraulischen Aktuator außer Betrieb zu stellen.

Es kann auch zweckmäßig sein mit Hilfe der Steuerungs- und/oder Regelungseinrichtung bei Anliegen eines geringen Lenkmoments an einer Lenkhandhabe des Fahrzeugs ein Bypassventil zwischen einer Druckleitung und einer Rücklaufleitung der Druckmittelfördereinrichtung zu öffnen um mit einem Kurzschluss in der Druckmittelförderung eine Außerbetriebsstellung des ersten, hydraulischen Aktuators zu bewirken.

Die Ansteuerung des ersten, hydraulischen Aktuators von der ECU erfolgt bevorzugt in Abhängigkeit von Fahrtparametern, wie etwa der Fahrgeschwindigkeit des Fahrzeugs. Bei Überschreiten einer unteren Grenzgeschwindigkeit etwa ist eine Außerbetriebsstellung des ersten, hydraulischen Aktuators erst möglich. Die Gierrate des Fahrzeugs oder die Querbeschleunigung des Fahrzeugs können zusätzliche Determinanten der ECU sein, aufgrund deren eine Außerbetriebsstellung des ersten, hydraulischen Aktuators erst möglich wird. Als weitere Determinanten können die Lenkgeschwindigkeit und/oder das Lenkmoment das ein Fahrer des Fahrzeugs auf die Lenkhandhabe aufbringt, sein, um einen Abschaltvorgang oder eine Außerbetriebsstellung des ersten, hydraulischen Aktuators zu ermöglichen. Bei hohen Lenkmomenten, etwa beim Parkieren des Fahrzeugs, sind alle Aktuatoren der hydraulischen Servolenkung in Betrieb, ebenso bei Lenkvorgängen mit rascher Veränderung des Lenkwinkels, bei hohen Lenkgeschwindigkeiten also.

Bei rascher Geradeausfahrt, etwa auf einer Autobahn dagegen ist eine Außerbetriebsstellung des ersten, hydraulischen Aktuators denkbar, wodurch das hydraulische Lenksystem keinen oder nur geringen Energiebedarf hat.

Es kann auch zweckmäßig sein, den Druckmitteldruck in einem Arbeitsraum des ersten, hydraulischen Aktuators als Determinante für eine Außerbetriebsstellung des ersten Aktuators heranzuziehen.

Der zweite Aktuator kann seine Stellkraft oder sein Drehmoment bevorzugt auf ein Element eines Lenkgetriebes aufprägen wobei das Lenkgetriebe mit dem ersten, hydraulischen Aktuator wirkverbunden ist.

Die hydraulische Servolenkung kann sowohl in einem Personenkraftwagen, bevorzugt aber in einem Nutzkraftwagen angeordnet sein und als Hilfskraft- oder Fremdkraftlenkung ausgebildet sein.

Die Erfindung wird nun näher anhand eines Ausführungsbeispiels beschrieben und anhand der beiliegenden Zeichnung erklärt.

In der Zeichnung zeigt:

Fig. 1 eine schematische Ansicht einer hydraulischen Hilfskraftlenkung eines Nutzkraftwagens mit einer schaltbaren Kupplung zwischen einem Verbrennungsmotor und einer diese antreibenden Druckmittelpumpe,

Fig. 2 eine schematische Ansicht einer hydraulischen Hilfskraftlenkung eines Nutzkraftwagens mit einer Druckmittelpumpe mit variablem Hub,

Fig. 3 eine schematische Ansicht einer hydraulischen Hilfskraftlenkung eines Nutzkraftwagens mit einem Bypassventil zwischen einer Druckleitung und einer Rücklaufleitung der Druckmittelpumpe.

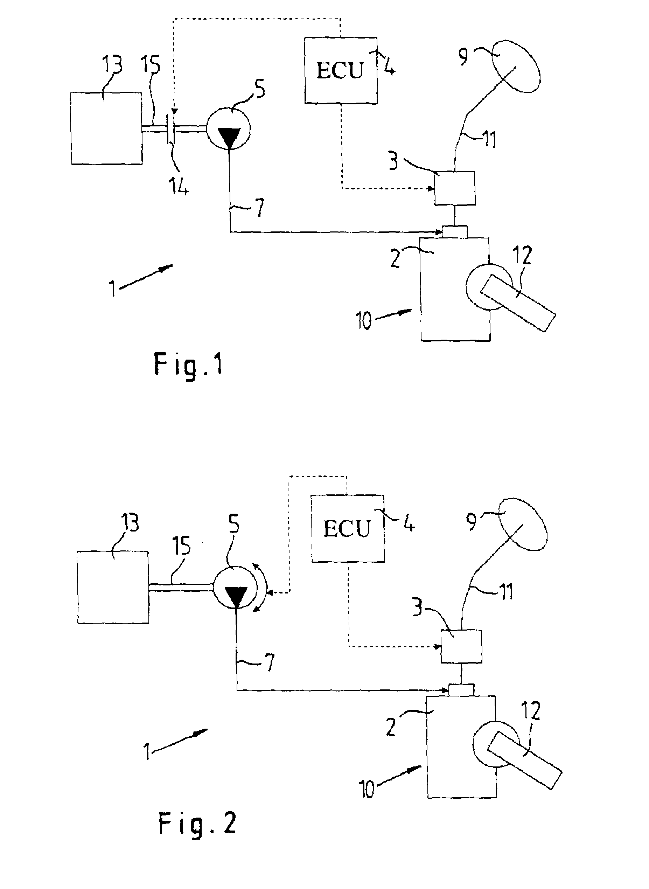

In Fig. 1 ist in einer schematischen Ansicht eine hydraulische Servolenkung 1 für einen Nutzkraftwagen gezeigt. Die hydraulische Servolenkung 1 dient zur Verminderung des auf eine Lenkhandhabe 9 aufzubringenden Lenkmoments zur Lenkwinkelverstellung nicht gezeigter lenkbarer Räder des Nutzkraftwagens und besteht aus der Lenkhandhabe 9, die drehfest mit einer Lenkwelle 11 verbunden ist und aus einem, mit der Lenkwelle 11 wirkverbundenen Lenkgetriebe 10 mit Lenkstockhebel 12. Das Lenkgetriebe10 ist als Kugelmutter-Hydrogetriebe mit einem darin angeordneten ersten, hydraulischen Aktuator 2 gebildet. Der erste, hydraulische Aktuator 2 wird von einer Druckmittelfördereinrichtung 5, die ihrerseits von einem Verbrennungsmotor 13 des Nutzkraftwagens angetrieben ist, mit Druckmittel versorgt.

Um bei Fahrsituationen, die einen geringen Lenkleistungsbedarf erfordern, Energie für den Betrieb der hydraulischen Servolenkung 1 zu sparen, ist vorgesehen, an dem Lenkgetriebe 10 einen zweiten, elektrischen Aktuator 3 mit geringerem Leistungsbedarf wie der erste, hydraulische Aktuator 2 anzuordnen. Der zweite, elektrische

Aktuator 3 wird ständig zur Bereitstellung eines Lenkhilfsmoments herangezogen und von einer Steuer- und/oder Regelungseinrichtung 4 (ECU) angesteuert.

Die Steuer- und/oder Regelungseinrichtung 4 sorgt zudem für den Betriebszustand des ersten, hydraulischen Aktuators 2 indem die Steuer- und/oder Regelungseinrichtung 4 eine schaltbare Kupplung 14 an einer Nebenabtriebswelle 15, die von dem Verbrennungsmotor 13 zum Antrieb der Druckmittelfördereinrichtung 5 angetrieben wird, ein- oder ausrückt, wodurch die Druckmittelfördereinrichtung 5 antriebslos geschaltet wird und der erste, hydraulische Aktuator 2 in eine Außerbetriebsstellung gebracht wird. Eine Außerbetriebsstellung des ersten, hydraulischen Aktuators 2 wird dann während der Fahrt des Nutzkraftwagens eingenommen, wenn lediglich ein Lenkleistungsbedarf erforderlich ist, der auch von dem zweiten, elektrischen Aktuator 3 alleine aufgebracht werden kann.

Die Steuer- und/oder Regelungseinrichtung 4 arbeitet dabei nach Maßgabe von Sensordaten, die die Fahrgeschwindigkeit, die aktuelle Gierrate oder Querbeschleunigung des Nutzkraftwagens, das Lenkmoment und die aktuelle Lenkgeschwindigkeit darstellen und nach Maßgabe von abgespeicherten Kennlinien, Kennfeldern und Algorithmen.

Bei einem hohen Lenkleistungsbedarf, etwa bei einem Parkiervorgang des Nutzkraftwagens, sind beide Aktuatoren 2, 3 in Betrieb und unterstützen die Lenktätigkeit des Fahrers des Nutzkraftwagens.

In Fig. 2 ist eine schematische Ansicht einer hydraulischen Hilfskraftlenkung eines Nutzkraftwagens mit einer Druckmittelfördereinrichtung 5 mit variablem Hub gezeigt. Für gleiche Bauteile gelten dieselben Bezugszeichen wie in Fig. 1. Um bei einer Fahr-situation mit geringerem Lenkleistungsbedarf, etwa bei Überschreiten einer vorgebbaren Fahrgeschwindigkeit und Unterschreiten einer Mindestlenkgeschwindigkeit und/oder eines Mindestlenkmoments Energie für den Betrieb der hydraulischen Servolenkung 1 einzusparen, ist vorgesehen, dass die Steuer- und/oder Regelungseinrichtung 4 (ECU) den Hub der Druckmittelfördereinrichtung 5 auf Null setzt, sodass die Lenkleistung des Fahrers in dieser Fahrtsituation nur von dem zweiten, elektrischen Aktuator 3 unterstützt wird und der erste, hydraulische Aktuator 2 in einer Außerbetriebsstellung verbracht ist.

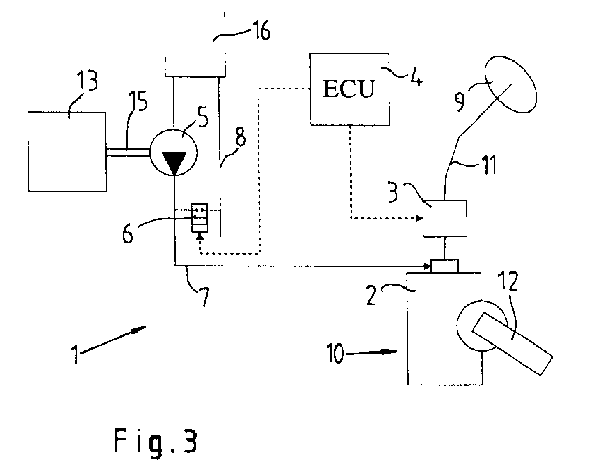

In Fig. 3 ist eine schematische Ansicht einer hydraulischen Hilfskraftlenkung 1 für einen Nutzkraftwagen mit einem Bypassventil 6 zwischen einer Druckleitung 7 für Druckmittel zu dem ersten, hydraulischen Aktuator 2 und einer Rücklaufleitung 8 für Druckmittel zu einem Druckmittelbehälter 16 gezeigt. Für gleiche Bauteile gelten die-selben Bezugszeichen wie in den Figuren 1 und 2.

Um bei einen geringen Lenkleistungsbedarf während der Fahrt des Nutzkraftwagens Energie einzusparen, wird der erste, hydraulische Aktuator 2 durch die Steuer- und/oder Regelungseinrichtung 4 abgeschaltet, indem das Bypassventil 6 geöffnet wird und somit ein Kurzschluss bei der Druckmittelförderung eintritt.

Die in den Figuren 1 bis 3 gezeigten konstruktiven Maßnahmen können auch in Kombination miteinander an einem hydraulischen Servolenksystem vorgesehen sein. Sie führen alle zu einer Reduzierung der Verlustleistung und der Druckmitteltemperatur im Betrieb der dargestellten Hilfskraftlenkungen.

## Patentansprüche

1. Hydraulische Servolenkung für ein Fahrzeug, mit einem ersten, hydraulischen Aktuator (2) zur Bereitstellung einer Lenkkraft oder Lenkhilfskraft für die Lenk-winkelverstellung eines gelenkten Rades des Fahrzeugs, und mit einem zweiten Aktuator (3) zur Bereitstellung einer Lenkkraft oder Lenkhilfskraft für die Lenkwinkelverstellung des gelenkten Rades, **dadurch gekennzeichnet,**
**dass** der erste, hydraulische Aktuator (2) bei der Fahrt des Fahrzeugs in Ab-hängigkeit von Fahrt- und/oder Fahrzeugparametern in eine Außerbetriebsstellung bringbar ist.

2. Hydraulische Servolenkung nach Anspruch 1, **dadurch gekennzeichnet, dass** der zweite Aktuator (3) ein elektrischer Aktuator ist.

3. Hydraulische Servolenkung nach Anspruch 1 oder 2, **dadurch gekennzeichnet, dass** der zweite Aktuator (3) einen geringeren Energiebedarf als der erste Aktuator (2) hat.

4. Hydraulische Servolenkung nach einem der Ansprüche 1 bis 3, **dadurch** gekenn-zeichnet, dass der erste, hydraulische Aktuator (2) bei einem geringen Lenkleistungsbedarf des Fahrzeugs in eine Außerbetriebsstellung gebracht ist.

5. Hydraulische Servolenkung nach einem der Ansprüche 1 bis 4, **dadurch gekennzeichnet, dass** der Betrieb des ersten, hydraulischen Aktuators (2) und des zweiten, elektrischen Aktuators (3) von einer Steuerungs- und/oder Regelungseinrichtung (4) gesteuert ist.

6. Hydraulische Servolenkung nach einem der Ansprüche 1 bis 5, **dadurch gekennzeichnet, dass** die Außerbetriebsstellung des ersten, hydraulischen Aktuators (2) durch eine Außerbetriebsstellung einer Druckmittelfördereinrichtung (5) für den ersten, hydraulischen Aktuator (2) bewirkt ist.

7. Hydraulische Servolenkung nach einem der Ansprüche 1 bis 5, **dadurch gekennzeichnet, dass** die Außerbetriebsstellung des ersten, hydraulischen Aktuators (2) durch die Reduzierung des Druckmittelförderstroms der Druckmittelfördereinrichtung (5) auf Null bewirkt ist.

8. Hydraulische Servolenkung nach einem der Ansprüche 1 bis 5, **dadurch gekennzeichnet, dass** die Außerbetriebsstellung des ersten, hydraulischen Aktuators (2) durch einen, von einem Bypassventil (6) bewirkten Kurzschluss einer Druckleitung (7) mit einer Rücklaufleitung (8) an der Druckmittelfördereinrichtung (5) bewirkt ist.

9. Hydraulische Servolenkung nach einem der Ansprüche 1 bis 8, **dadurch gekennzeichnet, dass** die Außerbetriebsstellung des ersten, hydraulischen Aktuators (2) in Abhängigkeit von der Fahrgeschwindigkeit des Fahrzeugs bewirkt ist.

10. Hydraulische Servolenkung nach einem der Ansprüche 1 bis 9, **dadurch gekennzeichnet, dass** die Außerbetriebsstellung des ersten, hydraulischen Aktuators (2) in Abhängigkeit von der Lenkgeschwindigkeit und/oder des Lenkmoments an einer Lenkhandhabe (9) der hydraulischen Servolenkung (1) erfolgt.

11. Hydraulische Servolenkung nach einem der Ansprüche 1 bis 10, **dadurch gekennzeichnet, dass** die Außerbetriebsstellung des ersten, hydraulischen Aktuators (2) in Abhängigkeit von der Gierrate und/oder der Querbeschleunigung des Fahrzeugs erfolgt.

12. Hydraulische Servolenkung nach einem der Ansprüche 1 bis 11, **dadurch gekennzeichnet, dass** die Außerbetriebsstellung des ersten, hydraulischen Aktuators (2) in Abhängigkeit von dem Druckmitteldruck in einem Arbeitsraum des ersten, hydraulischen Aktuators (2) erfolgt.

13. Hydraulische Servolenkung nach einem der Ansprüche 1 bis 12, **dadurch gekennzeichnet, dass** der erste, hydraulische Aktuator (2) und der zweite, elektrische Aktuator (3) auf ein Lenkgetriebe (10) wirken.

14. Hydraulische Servolenkung nach einem der Ansprüche 1 bis 13, **dadurch gekennzeichnet, dass** die hydraulische Servolenkung (1) eine Hilfskraft- oder Fremdkraftlenkung ist.

15. Hydraulische Servolenkung nach einem der Ansprüche 1 bis 14, **dadurch gekennzeichnet, dass** die hydraulische Servolenkung (1) in einem Personenkraftwagen oder Nutzkraftwagen eingesetzt ist.
